# EUROPEAN PATENT SPECIFICATION

(11) **EP 2 442 664 B1**
(45) Date of publication and mention of the grant of the patent: **04.09.2013**
(21) Application number: 10789808.2
(22) Date of filing: 24.05.2010
(51) Int. Cl.: A23C 3/02, A23C 3/033, A23C 9/123

(54) **METHOD OF PRODUCING A YOGHURT-BASED PRODUCT**
VERFAHREN ZUR HERSTELLUNG EINES PRODUKTS AUF JOGHURTBASIS
PROCÉDÉ DE FABRICATION D'UN PRODUIT À BASE DE YOGHOURT

(30) Priority: 18.06.2009 SE 0900826
(43) Date of publication of application: 25.04.2012
(73) Proprietor: Tetra Laval Holdings & Finance S.A., 1009 Pully (CH)
(72) Inventor: NILSSON, Lars-Ebbe, SE-237 36 Bjärred (SE)
(74) Representative: Tetra Pak - Patent Attorneys SE
(86) International application number: PCT/SE2010/000139
(87) International publication number: WO 2010/147530

(56) References cited:
- EP-A1- 1 082 964
- WO-A2-2009/071086
- US-A- 4 216 243
- US-A- 4 376 126
- US-A1- 2008 026 102

## Description

### TECHNICAL FIELD

The present invention relates to a method of producing a yoghurt-based product, where the milk raw material is pre-treated, preferably by pasteurizing, de-aeration, homogenization and possible dry matter (DM) adjustment, as well as the addition of requisite stabilizers and possible flavourings, whereafter the milk raw material is held at a temperature of 37-45°C, when a first bacteria culture is added, and the product undergoes an incubation period, the product thereafter being heat-treated at a temperature of 75-110°C, during a predetermined period of time.

### BACKGROUND ART

Yoghurt is one of the commonest and most popular fermented or cultured products that is sold world-wide. Yoghurt is available in numerous variations that may be more or less local. The commonest main types of yoghurt are yoghurt which has fermented inside the package, so-called "set type", and yoghurt which has fermented in tanks and then been packed, so-called "stirred type". Another large group consists of drinking yoghurts. By adding fruit, berries or other flavourings, a more or less infinite variety can be obtained.

EP 1 082 964 discloses yogust containing added lactor bacilli.

Yoghurt is produced from a milk raw material which is pre-treated and to which a bacteria culture has been added at a temperature of between 37 and 45°C. After an incubation period, the result is a finished yoghurt of one of the above-outlined types. The finished yoghurt is thereafter cooled and must be stored under refrigeration. This implies that the end product contains living yoghurt bacteria. In certain countries, the term 'yoghurt' may only be used for products that contain living yoghurt bacteria, i.e. the end product has not been heat treated. Such a yoghurt has limited shelf life and must be stored and distributed under refrigeration.

Yoghurt which has been heat treated after the fermentation is normally designated a yoghurt-based product. If the product is heat treated at approx.60°C, probably not all of the yoghurt bacteria are killed off, but an extended shelf life will be obtained, nevertheless, still requiring refrigerated storage. A heat treatment of between 75 and 110°C entails that there are no longer any living yoghurt bacteria in the product, but the shelf life of the product has been considerably extended even in storage at room temperature.

In order to be able to benefit from the favourable effects of living yoghurt bacteria and at the same time be able to provide a yoghurt-based product with extended shelf life, there has long been on the market a drinking straw, Life Top®, which contains living yoghurt bacteria. The drinking straw is intended for drinking yoghurt and, on intake of the product, the user also intakes the beneficial yoghurt bacteria which have lain protected inside the drinking straw.

### OBJECTS OF THE INVENTION

One object of the present invention is to realise a method of producing a yoghurt-based product, with extended shelf life, which, already in the package, contains living lactic acid bacteria, such as yoghurt bacteria.

A further object of the present invention is to realise a method which may be used for producing both a yoghurt-based product of the "stirred type" and drinking yoghurt.

### SOLUTION

These and other objects have been attained according to the present invention in that the method of the type described by way of introduction has been given the characterising feature that a second bacteria culture is added to the heat treated yoghurt-based product, this second culture being of the type which is not active below a certain predetermined pH, whereafter the product is packed aseptically.

Preferred embodiments of the present invention have further been given the characterising features as set forth in the appended subclaims.

### BRIEF DESCRIPTION OF THE ACCOMPANYING DRAWINGS

One preferred embodiment of the method according to the present invention will now be described in greater detail hereinbelow, with reference to the accompanying Drawings. In the accompanying Drawings:
Fig. 1 is a flow diagram for producing a yoghurt-based product of the "stirred type".
Fig. 2 is a flow diagram for producing a yoghurt-based product of the drinking yoghurt type; and
Fig. 3 shows a diagram of the development of the bacteria cultures.

The accompanying Drawings show only those details that are essential to an understanding of the present invention.

### DESCRIPTION OF PREFERRED EMBODIMENTS

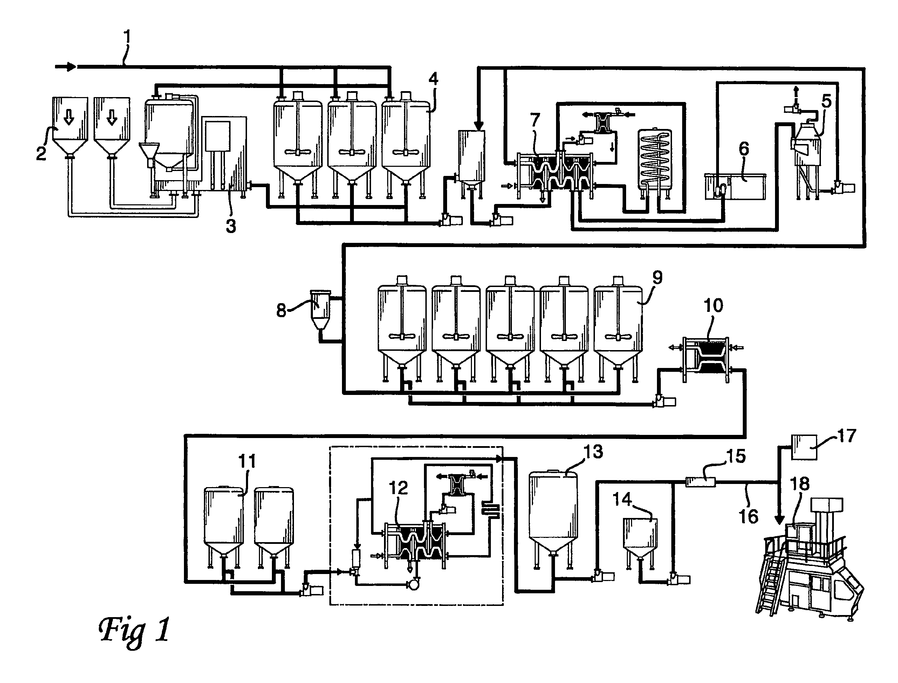

Fig. 1 is a flow diagram for producing a yoghurt-based product of the type which is entitled "stirred type" i.e. the yoghurt is fermented in tanks whereafter the finished product is packed. The raw material, which consists of good quality milk, enters into the plant for carrying the method according to the present invention into effect. The milk enters the plant through the conduit 1.

In the event of a need to adjust the dry matter (DM) in the milk, it is possible to admix milk powder, or alternatively protein powder, from the tanks 2. The milk and the milk powder are mixed together in the mixer 3 and circulated over the tanks 4 so that a continuous admixing of the milk powder is obtained. Other methods for adjusting the dry matter (DM) content are evaporation, or alternatively membrane filtering. Normally, a stabilizer is also added in this process.

The milk raw material which has been heated to approx. 60°C thereafter passes through a de-aeration vessel 5 in order to remove the air which may possibly have got into the milk on the adding of the milk powder. The de-airing process improves the viscosity and stability of the finished product, and it also facilitates the continued treatment of the milk raw material.

Thereafter, the milk raw material is homogenized in a homogenizer 6 in order to prevent cream setting and in order to obtain a stable and homogeneous product.

After the homogenization, the milk raw material is heated up to 90-95°C, for 5 minutes, or alternatively 120°C for 2 minutes. Other time/temperature combinations may also occur. The heating normally takes place in a plate heat exchanger 7, but other types of heat exchangers may also be employed. The heating is necessary in order to denature the whey proteins. Hereby, a more stable coagulum can be obtained, and whey separation in the finished product can be avoided.

After the heat treatment, the milk raw material is cooled down to 37-45°C, preferably 43°C. A first bacteria culture of lactic acid bacteria is now added to the milk raw material, such as yoghurt bacteria. The bacteria culture may be freeze dried or deep frozen and numerous different bacteria cultures are commercially available. The lactic acid bacteria are added either in-line, in that the milk raw material is caused to pass a small container 8 with the bacteria culture, or that the bacteria culture is added manually to one or more incubation tanks 9. The milk raw material with the added bacteria culture ferments while staying in the incubation tanks 9 at a maintained temperature of 37-45°C, preferably 43°C. The incubation time is normally 3 to 5 hours, depending on which bacteria culture is used.

When the desired pH of the product has been achieved, the fermentation is discontinued by cooling. A common pH is 4.0-4.5. The product is cooled down to approx. 20°C in a heat exchanger 10. The heat exchanger 10 is normally a plate heat exchanger, but other types of heat exchanger may also be employed. Thereafter, the product is conveyed to one or more buffer tanks 11.

The next step in the production process is a heat treatment of the product. The product is heated up to 75-110°C and held at this temperature during a given predetermined period of time. Preferably, at 90°C for 20 seconds. The more acidic the product, the lower the temperature will be that is required. The heating normally takes place in a plate heat exchanger 12, but other types of heat exchanger may also be employed. As a result of this final heat treatment of the product, there will be obtained a destruction of any possible yeast or fungal spores that are normally the cause of a deterioration in shelf life. The yoghurt bacteria are also killed off and the resultant product is a so-called yoghurt-based product. This product may be stored at room temperature or alternatively during a lengthy period of time under refrigeration.

On heating of yoghurt, the natural coagulant is destroyed and, on storage, the whey then separates from the product. In order to avoid this, it is necessary to add a stabilizer, normally a starch-based stabilizer. The admixture takes place in the manner as was described above in the adjustment of the dry matter (DM), but it may also take place later in the process, before the final heat treatment.

After possible intermediate storage in a buffer tank 13, fruit, jam or other flavourings may be added to the yoghurt-based product from the tank 14. The product is thereafter caused to pass a mixer 15 in order for the added flavourings to become distributed uniformly in the product. Alternatively, fruit, jam or other flavourings may be added before the final heat treatment.

Directly in the conduit 16, a second bacteria culture is thereafter added to the yoghurt-based product. This admixture takes place aseptically and the second bacteria culture may be added by means of some form of aseptic dosing equipment 17, such as Tetra Flex Dose®. The second bacteria culture must be of the type which is not active, i.e. does not ferment, below a certain pH. The type of yoghurt bacteria which ceases its activity at a pH of 4.0-4.5 is entitled a mild yoghurt bacteria, but other bacteria cultures which cease fermentation at a pH of 4.0-4.5 may also be employed.

After the dosing of the second bacteria culture, the finished product is conveyed to a filling machine 18 and packed aseptically in aseptic packages.

Since the yoghurt-based product had a pH of 4.0-4.5 when the fermentation of the first bacteria culture was discontinued and the product was thereafter heat treated, the second bacteria culture must be selected so that it cannot ferment in the packages. In other words, the second bacteria culture should not be active at or below the pH of the yoghurt-based product before the second bacteria culture was added.

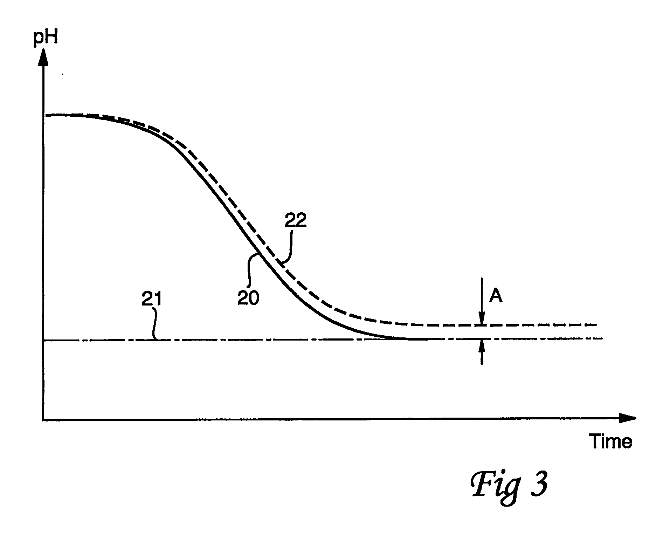

Fig. 3 shows the development of the two bacteria cultures over time. The solid curve 20 shows the development of the first bacteria culture. This development is stopped in that the fermentation is discontinued at a desired level which is illustrated by means of the ghosted line 21. The development of the second bacteria culture is also shown by means of the broken line curve 22. The distance A between the pH of the broken line and the pH at which the second bacteria culture is no longer active may be 0-0.5.

The finished yoghurt-based product which may be considered as being commercially sterile contains beneficial, living yoghurt bacteria. The product can be stored at room temperature, or alternatively in long-term storage under refrigeration.

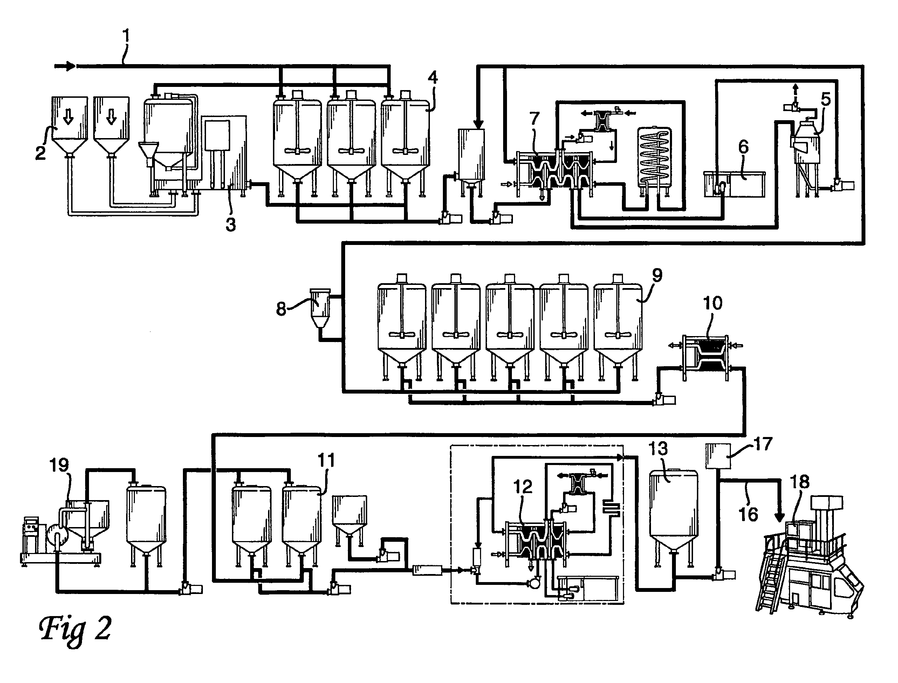

Fig. 2 is a flow diagram for producing a yoghurt-based product of the drinking yoghurt type. The raw material, which consists of good quality milk, enters into the plant for carrying the method according to the present invention into effect. The milk enters the plant through the conduit 1.

In the event of a need to adjust the dry matter (DM) in the milk, it is possible to admix milk powder, or alternatively protein powder, from the tanks 2. The milk and the milk powder are mixed together in the mixer 3 and circulated over the tanks 4 so that a continuous admixing of the milk powder is obtained. Other methods for adjusting the dry matter (DM) content are evaporation, or alternatively membrane filtering.

The milk raw material which has been heated to approx. 60°C thereafter passes through a de-aeration vessel 5 in order to remove the air which may possibly have got into the milk on the adding of the milk powder. The de-airing process improves the viscosity and stability of the finished product, and it also facilitates the continued treatment of the milk raw material.

Thereafter, the milk raw material is homogenized in a homogenizer 6 in order to prevent cream setting and in order to obtain a stable and homogeneous product.

After the homogenization, the milk raw material is heated up to 90-95°C, for 5 minutes, or alternatively 120°C for 2 minutes. Other time/temperature combinations may also occur. The heating normally takes place in a plate heat exchanger 7, but other types of heat exchangers may also be employed. The heating is necessary in order to denature the whey proteins. Hereby, a more stable coagulum can be obtained, and whey separation in the finished product can be avoided.

After the heat treatment, the milk raw material is cooled down to 37-45°C, preferably 43°C. A first bacteria culture of lactic acid bacteria is now added to the milk raw material, such as yoghurt bacteria. The bacteria culture may be freeze dried or deep frozen and numerous different bacteria cultures are commercially available. The lactic acid bacteria are added either in-line, in that the milk raw material is caused to pass a small container 8 with the bacteria culture, or that the bacteria culture is added manually to one or more incubation tanks 9. The milk raw material with the added bacteria culture ferments while staying in the incubation tanks 9 at a maintained temperature of 37-45°C, preferably 43°C. The incubation time is normally 3 to 5 hours, depending on which bacteria culture is used.

When the desired pH of the product has been achieved, the fermentation is discontinued by cooling. A common pH is 3.8-4.5. The product is cooled down to approx. 20°C in a heat exchanger 10. The heat exchanger 10 is normally a plate heat exchanger, but other types of heat exchanger may also be employed. Thereafter, the product is conveyed to one or more buffer tanks 11. Drinking yoghurts occasionally have a lower pH than other types of yoghurts, since sugar is most often added to the drinking yoghurts.

When the product is located in the buffer tanks 11, a stabilizer is normally added. For drinking yoghurts, use is normally made of a pectin based stabilizer which is dissolved in water. Other types of stabilizers may also be employed. The stabilizer is admixed into the product, for example in a high speed mixer 19. At the same time, sugar as well as desired flavourings such as aromatic substances or fruit juices are added.

The next step in the production process is a heat treatment of the product. The product is heated up to 75-110°C and held at this temperature during a given predetermined period of time. Preferably, at 90°C for 20 seconds. The more acidic the product, the lower the temperature will be that is required. The heating normally takes place in a plate heat exchanger 12, but other types of heat exchanger may also be employed. As a result of this final heat treatment of the product, there will be obtained a destruction of any possible yeast or fungal spores that are normally the cause of a deterioration in shelf life. The yoghurt bacteria are also killed off and the resultant product is a so-called yoghurt-based product. This product may be stored at room temperature or alternatively during a lengthy period of time under refrigeration.

Directly in the conduit 16, a second bacteria culture is thereafter added to the yoghurt-based product. This admixture takes place aseptically and the second bacteria culture may be added by means of some form of aseptic dosing equipment 17, such as Tetra Flex Dose®. The second bacteria culture must be of the type which is not active, i.e. does not ferment, below a certain pH. The type of yoghurt bacteria which ceases its activity at a pH of 4.0-4.5 is entitled a mild yoghurt bacteria, but other bacteria cultures which cease fermentation at a pH of 4.0-4.5 may also be employed.

After the dosing of the second bacteria culture, the finished product is conveyed to a filling machine 18 and packed aseptically in aseptic packages.

Since the yoghurt-based product had a pH of 3.8-4.5 when the fermentation of the first bacteria culture was discontinued and the product was thereafter heat treated, the second bacteria culture must be selected so that it cannot ferment in the packages. In other words, the second bacteria culture should not be active at or below the pH of the yoghurt-based product before the second bacteria culture was added.

The finished yoghurt-based product which may be considered as being commercially sterile contains beneficial, living yoghurt bacteria. The product can be stored at room temperature, or alternatively in long-term storage under refrigeration.

As will have been apparent from the foregoing description, the present invention realises a method of producing a yoghurt-based product with living lactic acid bacteria, such as yoghurt bacteria. The product is commercially sterile and can be stored at room temperature or during a lengthy period of time, under refrigeration. The product contains living lactic acid bacteria, such as yoghurt bacteria, as a result of the addition of a second bacteria culture. The method of producing a commercially sterile yoghurt-based product with living lactic acid bacteria may be employed for both yoghurt of the "stirred type" and as drinking yoghurt.

## Claims

1. A method of producing a yoghurt-based product, where the milk raw material is pre-treated, preferably by pasteurizing, de-aeration, homogenization and possible dry matter (DM) adjustment, as well as the addition of requisite stabilizers and possible flavourings, whereafter the milk raw material is held at a temperature of 37-45°C, when a first bacteria culture is added, and the product undergoes an incubation period, the product thereafter being heat-treated at a temperature of 75-110°C, during a predetermined period of time, **characterised in that** a second bacteria culture is added to the heat-treated yoghurt-based product, the culture being of the type which is not active below a given predetermined pH, whereafter the product is packed aseptically.

2. The method as claimed in Claim 1, **characterised in that** the predetermined pH is the same as or higher than the pH of the yoghurt-based product before the second bacteria culture is added.

3. The method as claimed in Claim 1, **characterised in that** the second bacteria culture is not active below a pH of 4.0-4.5

4. The method as claimed in Claim 1, **characterised in that** the second bacteria culture consists of a so-called mild culture.

5. The method as claimed in Claim 1, **characterised in that** the heat treatment takes place at a temperature of 90°C for 20 seconds.

## Patentansprüche

1. Verfahren zum Herstellen eines Produkts auf Joghurt-Basis, wobei das Milch-Ausgangsmaterial vorbehandelt wird, vorzugsweise durch Pasteurisieren, Entlüften, Homogenisieren und mögliches Einstellen des Trockenmaterialanteils (dry matter, DM), sowie Zugeben erforderlicher Stabilisatoren und möglicher Aromen, worauf das Milch-Ausgangsmaterial bei einer Temperatur von 37-45 °C gehalten wird, wenn eine erste Bakterienkultur zugegeben wird, und das Produkt eine Inkubationsperiode durchläuft, worauf das Produkt bei einer Temperatur von 75-110 °C mit einer vorbestimmten Zeitdauer wärmebehandelt wird, **dadurch gekennzeichnet, dass** zu dem wärmebehandelten Produkt auf Joghurt-Basis eine zweite Bakterienkultur zugegeben wird, wobei die Kultur von dem Typ ist, der unter einem gegebenen vorbestimmten pH-Wert nicht aktiv ist, worauf das Produkt aseptisch verpackt wird.

2. Verfahren gemäß Anspruch 1, **dadurch gekennzeichnet, dass** der vorbestimmte pH-Wert gleich oder höher ist als der pH-Wert des Produkts auf Joghurt-Basis, bevor die zweite Bakterienkultur zugegeben wird.

3. Verfahren gemäß Anspruch 1, **dadurch gekennzeichnet, dass** die zweite Bakterienkultur unter einem pH-Wert von 4,0-4,5 nicht aktiv ist.

4. Verfahren gemäß Anspruch 1, **dadurch gekennzeichnet, dass** die zweite Bakterienkultur aus einer so genannten milden Kultur besteht.

5. Verfahren gemäß Anspruch 1, **dadurch gekennzeichnet, dass** die Wärmebehandlung 20 Sekunden lang bei einer Temperatur von 90 °C erfolgt.

## Revendications

1. Procédé de fabrication d'un produit à base de yoghourt, dans lequel la matière première du lait est prétraitée, de préférence par pasteurisation, désaération, homogénéisation et ajustement éventuel de la matière sèche (MS), ainsi que ajout de stabilisants requis et d'arômes éventuels, puis la matière première du lait est maintenue à une température de 37-45°C, lorsqu'une première culture bactérienne est ajoutée, et le produit subit une période d'incubation, le produit étant ensuite traité thermiquement à une température de 75-110°C, pendant une période de temps prédéterminée, **caractérisé en ce qu'**une deuxième culture bactérienne est ajoutée au produit à base de yoghourt traité thermiquement, la culture étant du type qui n'est pas actif en-dessous d'un pH prédéterminé donné, puis le produit est emballé de façon aseptique.

2. Procédé selon la revendication 1, **caractérisé en ce que** le pH prédéterminé est identique ou supérieur au pH du produit à base de yoghourt avant l'ajout de la deuxième culture bactérienne.

3. Procédé selon la revendication 1, **caractérisé en ce que** la deuxième culture bactérienne n'est pas active en-dessous d'un pH de 4,0-4,5.

4. Procédé selon la revendication 1, **caractérisé en ce que** la deuxième culture bactérienne est constituée d'une culture dite douce.

5. Procédé selon la revendication 1, **caractérisé en ce que** le traitement thermique est effectué à une température de 90°C pendant 20 secondes.
